# FASCICULE DE BREVET EUROPEEN

(11) **EP 1 537 982 B1**
(45) Date de publication et mention de la délivrance du brevet: **17.10.2007**
(21) Numéro de dépôt: 04106144.1
(22) Date de dépôt: 29.11.2004
(51) Int. Cl.: B29C 70/46, B29C 70/34, B29D 24/00

(54) **Panneaux auto-raidis en composite pré-imprégné et procédés de mise en place des éléments de tels panneaux**
Selbstverstärkte Verbundplatten aus Prepreg und Verfahren zur Positionierung von Teilen solcher Platten
Self reinforced composite panels from prepreg and placement of elements of such panels

(30) Priorité: 04.12.2003 FR 0314254
(43) Date de publication de la demande: 08.06.2005
(73) Titulaire: AIRBUS France, 31060 Toulouse (FR)
(72) Inventeur: Fournie, Ludovic, 31300 Toulouse (FR); Herve, Claude, 44230 Saint Sebastien sur Loire (FR); Fort, Frédéric, 31180 ST GENIES BELLEVUE (FR)
(74) Mandataire: Schmit, Christian Norbert Marie

(56) Documents cités:
- FR-A- 2 440 831
- GB-A- 2 105 254
- US-A- 5 538 589

## Description

La présente invention se rapporte à la fabrication de panneaux auto-raidis constitués à partir de nappes de fibres pré-imprégnées et destinées notamment à la réalisation de panneaux de voilure et de caissons de fuselage par exemple.

Plus précisément, les panneaux auto-raidis visés par l'invention sont du type constitué d'une peau formée généralement d'une pluralité de plis superposés de fibres de carbone pré-imprégnées, sur l'une des faces de laquelle sont rapportés et disposés côte à côte des raidisseurs en forme de U dont les parties de liaison des branches du U sont plaquées contre ladite peau, avec interposition, entre les branches en regard de deux raidisseurs adjacents, d'une structure d'interfaçage communément appelée « clou », complétée par une « tête de clou » constituée par un cordon de résine de remplissage.

Plus précisément encore, la présente invention vise à simplifier et perfectionner le type de panneau à raidisseurs en U comme décrit dans le brevet FR-A-2440831 et le préambule des revendications 1, 4 et 5 et illustré en figure 1 des dessins annexés dont la structure d'interfaçage comprenant un clou formé de deux demi-clous disposés symétriquement et une tête de clou interposée entre les bords en regard des demi-clous, implique une étape particulière de formage des demi-clous.

A cet effet, l'invention a pour objet un panneau auto-raidi en composite pré-imprégné du type constitué d'une peau de base, sur l'une des faces de laquelle sont rapportés et disposés côte à côte des raidisseurs en forme de U dont les parties de liaison des branches du U sont plaquées contre ladite peau, avec interposition, entre les branches en regard de deux raidisseurs adjacents, d'une structure d'interfaçage communément appelée « clou », complétée par une « tête de clou » constituée par un cordon de résine de remplissage, caractérisé en ce que ledit clou est formé d'une bande de section rectangulaire dont la tranche, côté peau, est directement en contact avec la face en regard de ladite peau et en ce que la tête de clou est constituée de deux demi-têtes disposées symétriquement dans l'angle formé entre la peau et le clou.

Suivant un premier mode de réalisation, ladite bande formant le clou est monobloc et constituée d'au moins un pli de fibres de carbone pré-imprégnées.

Suivant un second mode de réalisation, ladite bande formant le clou est constituée de deux éléments ou demi-clous, accolés, formés chacun d'au moins un pli de fibres de carbone pré-imprégnées.

L'invention a également pour objet des procédés de mise en place des éléments constitutifs de ces deux modes de réalisation.

C'est ainsi que l'invention a pour objet un procédé de mise en place des éléments d'un panneau auto-raidi en composite pré-imprégné du type constitué d'une peau de base sur l'une des faces de laquelle sont rapportés et disposés côte à côte des raidisseurs en forme de U dont les parties de liaison des branches du U sont plaquées contre ladite peau, avec interposition, entre les branches en regard de deux raidisseurs adjacents, d'une structure d'interfaçage communément appelée « clou », complétée par une « tête de clou » constituée par un cordon de résine de remplissage, ledit clou étant monobloc et ladite tête de clou étant constituée de deux demi-têtes disposées symétriquement dans l'angle formé entre la peau et ledit clou, caractérisé par les étapes suivantes :
- drapage d'une pluralité de plis superposés de fibres de carbone pré-imprégnées pour constituer ladite peau de base ;
- mise en place et formage sur des poinçons individuels à section en U et arêtes arrondies et de longueur correspondant à celle des raidisseurs en U du panneau à réaliser, d'au moins un pli de renfort en fibres de carbone pré-imprégnées ;
- réalisation par drapage d'au moins un pli de fibres de carbone pré-imprégnées d'un clou constitué d'une bande de longueur correspondant à celle des raidisseurs en U et de largeur égale à la hauteur des branches dudit U ;
- positionnement côte à côte des poinçons en position de U renversé avec interposition dudit clou ;
- mise en place de part et d'autre de chaque clou entre ce dernier et ledit pli de renfort des deux demi-têtes de clou susdites ;
- compactage de l'ensemble des poinçons ainsi accolés ;
- retournement à 180° de l'ensemble des poinçons compactés ;
- positionnement de cet ensemble sur ladite peau de base en sorte de plaquer contre cette dernière une surface plane continue définie, d'une part, par la face externe des parties de liaison des branches des U des raidisseurs et, d'autre part, par l'ensemble « clou + têtes de clou » séparant deux raidisseurs adjacents ;
- et, enfin, retrait desdits poinçons en U.

L'invention a également pour objet un procédé de mise en place des éléments d'un panneau auto-raidi en composite pré-imprégné du type constitué d'une peau de base sur l'une des faces de laquelle sont rapportés et disposés côte à côte des raidisseurs en forme de U dont les parties de liaison des branches du U sont plaquées contre ladite peau, avec interposition, entre les branches en regard de deux raidisseurs adjacents, d'une structure d'interfaçage communément appelée « clou », complétée par une « tête de clou » constituée par un cordon de résine de remplissage, ledit clou étant constitué de deux demi-clous accolés et ladite tête de clou étant constituée de deux demi-têtes disposées symétriquement dans l'angle formé entre la peau et ledit clou, caractérisé par les étapes suivantes :
- mise en place et formage sur des poinçons individuels à section en U et arêtes arrondies et de longueur correspondant à celle des raidisseurs en U du panneau à réaliser, d'au moins un pli de renfort en fibres de carbone pré-imprégnées ;
- réalisation par drapage d'au moins un pli de fibres de carbone pré-imprégnées de demi-clous constitués d'une bande de longueur correspondant à celle des raidisseurs en U et de largeur égale à la hauteur des branches dudit U ;
- mise en place sur les deux flancs de chaque poinçon revêtu dudit pli de renfort et en position de U renversé, d'un demi-clou, et d'une demi-tête de clou insérée entre ledit pli de renfort et le demi-clou, à hauteur d'une arête arrondie du poinçon ;
- compactage individuel de chaque poinçon ainsi revêtu ;
- retournement individuel à 180° des poinçons ;
- puis, positionnement des poinçons côte à côte sur ladite peau de base en sorte de plaquer contre cette dernière une surface plane continue définie, d'une part, par la face externe des parties de liaison des branches des U des raidisseurs et, d'autre part, par l'ensemble « clou + têtes de clou » séparant deux raidisseurs adjacents ;
- et, enfin, retrait desdits poinçons en U.
   Un tel processus de mise en place des éléments du panneau est particulièrement approprié à la réalisation de panneaux de très grandes dimensions. En effet, comme on le verra en détail plus loin, les panneaux du type selon ledit premier mode de réalisation impliquent, lors de leur fabrication, une phase de retournement d'un ensemble, à savoir l'outillage portant l'ensemble des raidisseurs en U, qui pose des problèmes de manutention et également d'outillage, du fait de leurs encombrements.
   Le processus de mise en place de panneaux selon ledit second mode de réalisation évite toute manipulation d'ensembles lourds et encombrants puisque les opérations de retournement consistent à manipuler, et notamment retourner, uniquement des poinçons individuels, les uns après les autres.
   D'autres caractéristiques et avantages ressortiront de la description qui va suivre de modes de mise en oeuvre de l'invention, description donnée à titre d'exemple uniquement et en regard des dessins annexés sur lesquels
- figure 1 est une vue en coupe transversale partielle d'un panneau auto-raidi à raidisseurs en U rapportés sur une peau de base ;
- figure 2 est une vue en coupe transversale partielle d'un panneau de l'invention selon un premier mode de réalisation ;
- figure 3 illustre la mise en place d'un pli sur un poinçon à section en U ;
- figure 4 illustre la mise en place du clou et des deux demi-têtes de clou entre deux poinçons ;
- figure 5 illustre le retournement à 180° de l'ensemble des poinçons de la figure 4 ;
- figures 6, 7 et 8 illustrent les étapes finales de mise en place de l'ensemble raidisseurs-clous-têtes de clou de la figure 5 sur une peau de base et de retrait des poinçons ;
- figure 9 est une vue en coupe transversale partielle d'un panneau de l'invention selon un second mode de réalisation ;
- figure 10 illustre la mise en place des demi-clous et des demi-têtes de clou du panneau de la figure 9 sur un poinçon ;
- figure 11 illustre le retournement individuel à 180° du poinçon ;

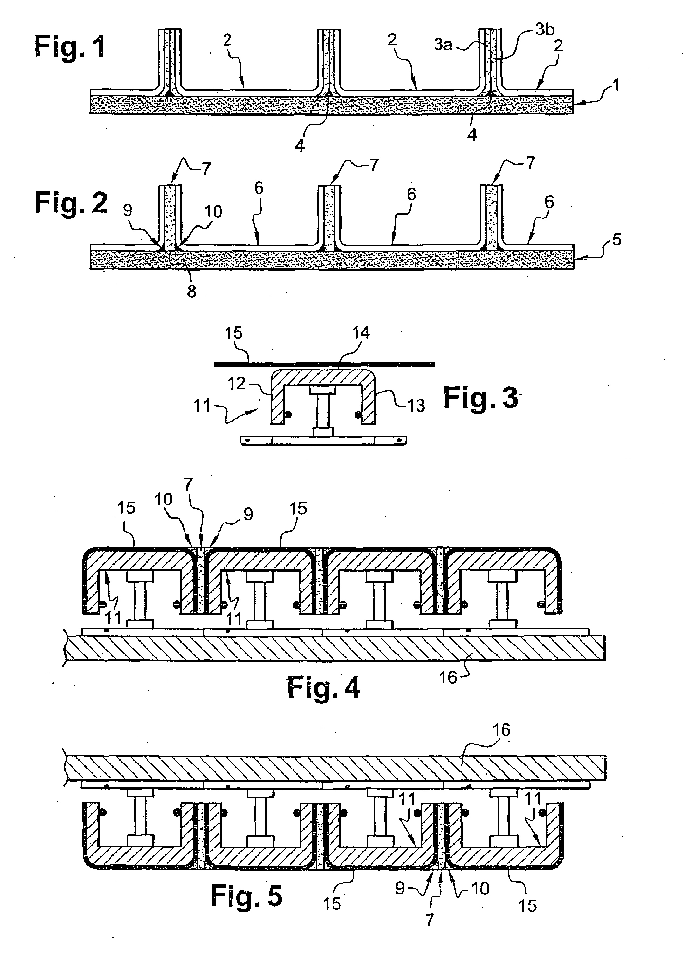

- figure 1 2 illustre le placement côte à côte après retournement des poinçons, et

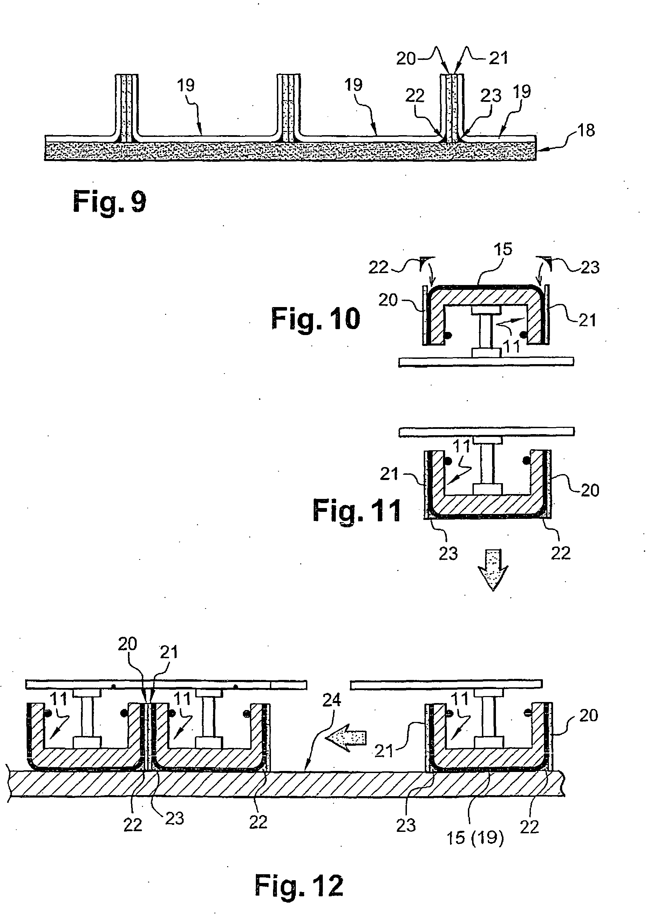

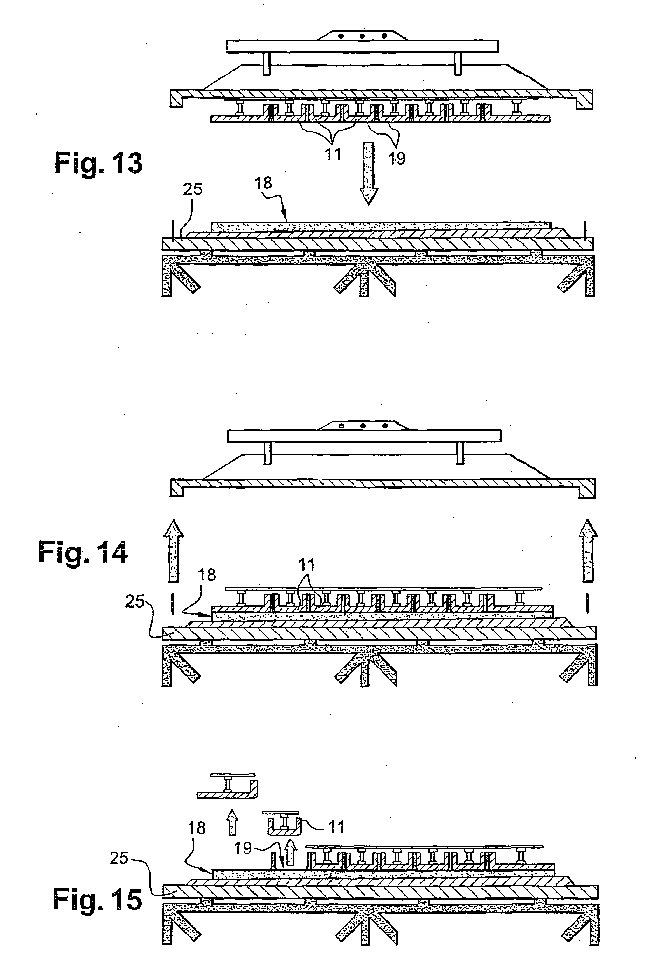

- figures 13 à 15 illustrent les étapes finales de mise en place de l'ensemble raidisseurs-clous-têtes de clou de la figure 12 sur une peau de base et de retrait des poinçons.

Sur la figure 1 on a représenté en coupe transversale un panneau auto-raidi en composite pré-imprégné constitué d'une peau de base 1 sur l'une des faces de laquelle sont rapportés des raidisseurs 2 en forme de U disposés côte à côte parallèlement et séparés entre eux par une structure d'interfaçage comprenant un clou 3 et une tête de clou 4, le clou étant formé de deux demi-clous 3a, 3b disposés symétriquement, la tête de clou 4 comblant l'espace subsistant entre la peau 1, d'une part, et les bords en regard des demi-clous 3a, 3b, d'autre part.

La peau 1, de même que les raidisseurs 2 en forme de U et les demi-clous 3a, 3b, sont constitués d'un empilement de plis formés de tissus ou nappes de fibres de carbone pré-imprégnées d'une résine appropriée. Les raidisseurs 2, les demi-clous 3a, 3b et les têtes de clou 4 courent généralement sur toute la longueur du panneau.

L'objet de l'invention vise à simplifier et perfectionner le type de panneau représenté en figure 1.

A cet effet, il est proposé de remplacer l'ensemble des clous 3a, 3b qui nécessite une étape de formage spécial le long d'un de leurs bords longitudinaux par un clou plat réalisé suivant une première variante illustrée par la figure 2 ou suivant une seconde variante illustrée par la figure 9.

Dans le mode de réalisation de la figure 2, le panneau comprend une peau de base 5, sur l'une des faces de laquelle sont rapportés des raidisseurs 6 en forme de U, entre lesquels est disposé un clou monobloc 7 de section rectangulaire dont la tranche 8 est plaquée directement contre la face en regard de la peau 5, des demi-têtes de clou 9, 10 comblant les espaces ménagés dans les angles formés entre la peau 5 et les clous 7, sous les raidisseurs 6.

On va décrire maintenant le procédé selon l'invention de mise en place des éléments constitutifs du panneau de la figure 2, lors de sa fabrication.

Sur la figure 3 on a représenté en 11 un poinçon dont la section est en forme de U définissant trois surfaces externes planes orthogonales ou parallèles entre elles, respectivement des surfaces 1 2 et 13 correspondant aux deux branches parallèles du U et une surface 14 de liaison.

Le poinçon 11 présente une longueur au moins égale à celle des raidisseurs 6 à réaliser et est placé dans la position renversée du U pour la mise en place des plis superposés en forme de bandes rectangulaires devant constituer les raidisseurs.

En 1 5 est représenté en coupe transversale un tel empilement réalisé par drapage et formant une bande de longueur égale à celle du raidisseur en U à obtenir.

Sur le poinçon 11, préalablement revêtu d'un film de polyéthylène (non représenté) pour éviter le collage de la bande 15 et permettre le retrait ultérieur du poinçon, la bande 15 est posée à cheval comme illustré, en sorte de former sous infra-rouge le raidisseur en U en plaquant les bords de la bande 15 sur les flancs 12, 13 du poinçon, les bords longitudinaux de la bande étant recoupés en fonction de la hauteur desdits flancs.

La figure 4 illustre l'étape suivante de mise en place côte à côte sur un outillage 16 des poinçons 11 ainsi revêtus de la bande 15, avec interposition, entre deux poinçons 11, d'un clou 7, préalablement réalisé par drapage d'un ou plusieurs plis de fibres de carbone pré-imprégnées et recoupage aux dimensions des ailes 12, 13 des poinçons. Les demi-têtes de clou 9, 10 sont placées en dernier.

Ensuite, une vessie (non représentée) est placée sur l'ensemble et le vide est fait pour compacter les éléments 7, 9, 10, 15, afin d'avoir une surface la plus uniformément plane que possible et une absence d'espaces ou interstices vides à hauteur de l'ensemble clou-tête de clou.

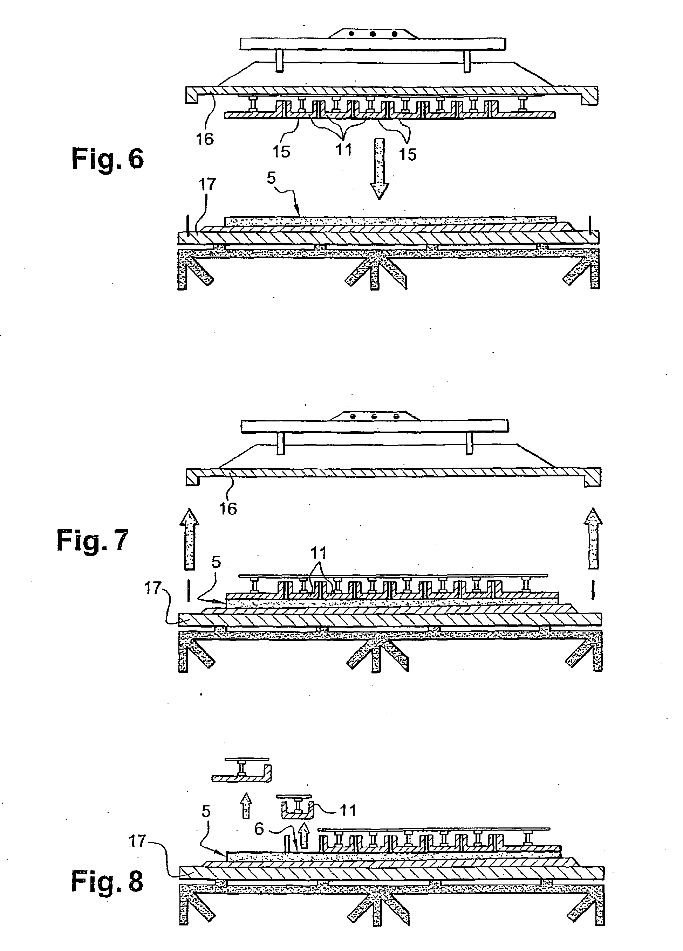

L'étape suivante consiste à retourner à 180° (figure 5) l'ensemble des poinçons, puis à amener (figure 6) la plaque 16 de montage des poinçons 11 au dessus de la peau de base 5 en place sur son marbre d'attente 1 7.

Puis, l'ensemble des poinçons 11 est déposé sur la peau 5 (figure 7) et, enfin, les poinçons 11 sont enlevés les uns après les autres (figure 8) en sorte d'obtenir une structure d'ensemble, selon la figure 2, qu'il conviendra ensuite de consolider en autoclave à la manière habituelle.

La figure 9 représente un panneau de l'invention selon le second mode de réalisation.

Le panneau de la figure 9 comprend une peau de base 18, sur l'une des faces de laquelle sont rapportés des raidisseurs 19 en forme de U, entre lesquels sont disposés deux demi-clous 20, 21 accolés sur toute leur largeur, les tranches des demi-clous étant plaquées directement contre la face en regard de la peau 18, les demi-têtes de clous 22, 23 comblant les espaces ménagés dans les angles formés entre la peau 18 et les demi-clous 20, 21 sous les raidisseurs 19.

On va décrire maintenant le procédé selon l'invention de mise en place des éléments constitutifs du panneau de la figure 9 lors de sa fabrication.

Après mise en place d'une bande 15 à cheval sur un poinçon 11 pour constituer un raidisseur 19, cette mise en place s'effectuant comme illustré par la figure 3, on met en place (figure 10) sur les deux flancs du poinçon 11 ainsi revêtu de la bande 15, un demi-clou 20, 21 préalablement drapé et découpé.

Une fois les demi-clous 20, 21 en place, on positionne les deux demi-têtes de clous 22, 23 dans les espaces vides existant entre la bande 15 et les demi-clous 20, 21.

Ensuite, une vessie (non représentée) est placée sur l'ensemble et le vide est fait pour compacter les éléments 20, 21, 22, 23 et 15.

Ces mêmes opérations sont effectuées sur autant de poinçons 11 que de raidisseurs 19 à positionner sur la peau 18.

L'étape suivante est le retournement individuel des poinçons 11 à 180° illustré par le passage de la figure 10 à la figure 11 en vue de leur placement côte à côte (figure 12) sur un marbre 24.

Puis, l'ensemble des poinçons 11 est pris en charge et soulevé à l'aide d'un pont roulant (figure 13) pour être déposé (figure 14) sur la peau 18 préalablement préparée par drapage à la manière connue et en attente sur son marbre 25 et, enfin, les poinçons 11 sont enlevés les uns après les autres (figure 15) en sorte d'obtenir une structure d'assemblage selon la figure 9, qu'il conviendra ensuite de consolider en autoclave à la manière habituelle.

Un tel processus de mise en place des éléments du panneau selon la figure 9 présente par rapport à celui nécessaire à la réalisation du panneau selon la figure 1, les avantages substantiels suivants :
- le rassemblement (figure 12) des éléments raidisseurs (19) dans la position (poinçons 11' en U dans la position normale du U) correspondant à leur placement par dépose sur la peau de base 18 se fait par retournement des poinçons individuellement après l'étape de compactage sur chaque poinçon des éléments 20, 21, 22, 23 et 15. Une telle manipulation se fait aisément et ne nécessite pas un outillage exceptionnel.
- au contraire, dans la cas du panneau de la figure 1, les têtes de clous 4 ne peuvent être mises en place puis soumises à compactage que sur l'ensemble complet des poinçons de conformation des raidisseurs qui doivent être alors dans la position du U renversé et disposés côte à côte. Il est alors nécessaire, après compactage en bloc de tous les poinçons, de les retourner de 180° pour les mettre en position de dépose sur la peau de base 1. Cette manipulation nécessite des moyens d'envergure et un espace suffisant pour effectuer le retournement d'un ensemble de grandes dimensions quand il s'agit d'un panneau de grande taille.
- les demi-clous 20, 21 sont de simples bandes rectangulaires plates plus simples et faciles à réaliser que les demi-clous 3a, 3b à bords tombés à hauteur des têtes de clou 4, nécessitant une phase de compactage préalable.

Il est à noter que l'étape illustrée par la figure 12 de placement des poinçons 11 côte à côte sur le marbre 24 pourrait être supprimée en positionnant directement les poinçons 11 les uns après les autres sur la peau 18 en place sur son marbre 25 (figure 14).

Il est également à noter que le type de panneau de la figure 2 est de préférence réservé à la fabrication de panneaux n'ayant pas de trop grandes dimensions du fait que le processus de mise en place des éléments constitutifs est analogue à celui du panneau de la figure 1, avec les inconvénients que l'on vient de rappeler.

Lorsqu'il s'agira de réaliser des panneaux de plus grandes dimensions c'est le type de structure de la figure 9 qui sera donc préféré.

Enfin, d'une manière générale la tenue mécanique des panneaux de l'invention, quel que soit le mode de réalisation choisi, est identique, notamment à hauteur des zones d'arrêt de raidisseur, à celle de panneaux conformes à la figure 1.

## Revendications

1. Panneau auto-raidi en composite pré-imprégné du type constitué d'une peau de base (5 ;18), sur l'une des faces de laquelle sont rapportés et disposés côte à côte des raidisseurs (6 ; 19) en forme de U dont les parties de liaison des branches du U sont plaquées contre ladite peau, avec interposition, entre les branches en regard de deux raidisseurs adjacents, d'une structure d'interfaçage communément appelée « clou », complétée par une « tête de clou » constituée par un cordon de résine de remplissage, **caractérisé en ce que** ledit clou est formé d'une bande (7 ;20 ;21) de section rectangulaire dont la tranche, côté peau (5 ;18), est directement en contact avec la face en regard de ladite peau et **en ce que** la tête de clou est constituée de deux demi-têtes (9 ;10 ;22 ;23) disposées symétriquement dans l'angle formé entre la peau (5 ;18) et le clou (7 ;20 ;21).

2. Panneau selon la revendication 1, **caractérisé en ce que** ladite bande formant le clou est monobloc (7) et constituée d'au moins un pli de fibres de carbone pré-imprégnées.

3. Panneau selon la revendication 1, **caractérisé en ce que** ladite bande formant le clou est constituée de deux éléments ou demi-clous (20 ;21), accolés, formés chacun d'au moins un pli de fibres de carbone pré-imprégnées.

4. Procédé de mise en place des éléments d'un panneau auto-raidi en composite pré-imprégné du type constitué d'une peau de base (5) sur l'une des faces de laquelle sont rapportés et disposés côte à côte des raidisseurs (6) en forme de U dont les parties de liaison des branches du U sont plaquées contre ladite peau, avec interposition, entre les branches en regard de deux raidisseurs adjacents, d'une structure d'interfaçage communément appelée « clou », complétée par une « tête de clou » constituée par un cordon de résine de remplissage, ledit clou étant monobloc (7) et **caractérisé en ce que** ladite tête de clou est constituée de deux demi-têtes (9, 10) de clou disposées symétriquement dans l'angle formé entre la peau (5) et ledit clou (7), et par les étapes suivantes :
- drapage d'une pluralité de plis superposés de fibres de carbone pré-imprégnées pour constituer ladite peau de base (5) ;
- mise en place et formage sur des poinçons individuels (11) à section en U et arêtes arrondies et de longueur correspondant à celle des raidisseurs en U du panneau à réaliser, d'au moins un pli de renfort (6) en fibres de carbone pré-imprégnées ;
- réalisation par drapage d'au moins un pli de fibres de carbone pré-imprégnées d'un clou (7) constitué d'une bande de longueur correspondant à celle des raidisseurs (6) en U et de largeur égale à la hauteur des branches dudit U ;
- positionnement côte à côte des poinçons (11) en position de U renversé avec interposition dudit clou (7) ;
- mise en place de part et d'autre de chaque clou (7) entre ce dernier et ledit pli de renfort (6) des deux demi-têtes de clou (9, 10) susdites ;
- compactage de l'ensemble des poinçons (11) ainsi accolés ;
- retournement à 180° de l'ensemble des poinçons (11) compactés ;
- positionnement de cet ensemble sur ladite peau de base (5) en sorte de plaquer contre cette dernière une surface plane continue définie, d'une part, par la face externe des parties de liaison des branches des U des raidisseurs (6) et, d'autre part, par l'ensemble « clou + têtes de clou » séparant deux raidisseurs (6) adjacents ;
- et, enfin, retrait desdits poinçons (11) en U.

5. Procédé de mise en place des éléments d'un panneau auto-raidi en composite pré-imprégné du type constitué d'une peau de base (18) sur l'une des faces de laquelle sont rapportés et disposés côte à côte des raidisseurs (19) en forme de U dont les parties de liaison des branches du U sont plaquées contre ladite peau, avec interposition, entre les branches en regard de deux raidisseurs adjacents, d'une structure d'interfaçage communément appelée « clou », complétée par une « tête de clou » constituée par un cordon de résine de remplissage, **caractérisé en ce que** ledit clou est constitué de deux demi-clous (20, 21) accolés et ladite tête de clou étant constituée de deux demi-têtes (22, 23) disposées symétriquement dans l'angle formé entre la peau (18) et ledit clou (20, 21), et par les étapes suivantes :
- mise en place et formage sur des poinçons individuels (11) à section en U et arêtes arrondies et de longueur correspondant à celle des raidisseurs en U du panneau à réaliser, d'au moins un pli de renfort (15) en fibres de carbone pré-imprégnées ;
- réalisation par drapage d'au moins un pli de fibres de carbone pré-imprégnées de demi-clous (20, 21) constitués d'une bande de longueur correspondant à celle des raidisseurs (19) en U et de largeur égale à la hauteur des branches dudit U ;
- mise en place sur les deux flancs de chaque poinçon (11) revêtu dudit pli de renfort (15) et en position de U renversé, d'un demi-clou (20, 21), et d'une demi-tête de clou (22, 23) insérée entre ledit pli de renfort (15) et le demi-clou (20, 21), à hauteur d'une arête arrondie du poinçon ;
- compactage individuel de chaque poinçon (11) ainsi revêtu ;
- retournement individuel à 180° des poinçons (11) ;
- puis, positionnement des poinçons (11) côte à côte sur ladite peau de base (18) en sorte de plaquer contre cette dernière une surface plane continue définie, d'une part, par la face externe des parties de liaison des branches des U des raidisseurs (15) et, d'autre part, par l'ensemble « clou + têtes de clou » séparant deux raidisseurs adjacents ;
- et, enfin, retrait desdits poinçons (11) en U.

## Claims

1. A self-stiffened panel of preimpregnated composite having a base skin (5, 18), a first side of the base skin including a plurality of substantially U-shaped stiffeners (6, 19) placed side-by-side, adjoining branches of two adjacent stiffeners interposed by an interfacing structure and the parts connecting the branches of the U being flattened against the base skin, the interfacing structure comprising a nail having a nail-head comprised of a cord of filling resin,
wherein the nail is formed from a band (7, 20, 21) having a rectangular cross-section whose edge, on the skin side, is in direct contact with the adjoining surface of said skin and the nail-head comprises two half nail-heads (9, 10, 22, 23) arranged substantially symmetrically in an angle formed between the base skin (5, 18) and the nail (7, 20, 21).

2. The panel of claim 1, wherein the band forming the nail is a one-piece structure comprising at least one ply of preimpregnated carbon fibers.

3. The panel of claim 1, wherein the band forming the nail comprises two half-nails arranged side-by-side, each half-nail comprising at least one ply of preimpregnated carbon fibers.

4. A method of manufacturing components of a self-stiffened panel of preimpregnated composite having a base skin (5), a first side of the base skin including a plurality of substantially U-shaped stiffeners (6) placed side-by-side, adjoining branches of two adjacent stiffeners interposed by an interfacing structure and the parts connecting the branches of the U being flattened against the base skin, the interfacing structure comprising a nail having a nail-head comprised of a cord of filling resin, the nail comprising a one-piece structure and **characterised in that** the nail-head comprises two half-nail-heads arranged substantially symmetrically in an angle formed between the base skin and the nail, and by the following steps:
draping a plurality of superimposed plies of preimpregnated carbon fiber to form the base skin (5);
placing and shaping at least one reinforcing ply of preimpregnated carbon fibers on each of a set of individual punches (11), the punches having substantially U-shaped cross-sections and rounded corners and a length corresponding to a length of the U-shaped stiffeners;
forming a nail (7) comprising a band having a length corresponding to the length of the U-shaped stiffeners and a width corresponding to a height of the branches of the U-shaped stiffeners by draping at least one ply of preimpregnated carbon fibers;
positioning the set of punches (11) side-by-side in inverted U positions with a nail (7) interposing adjacent punches;
placing two half-nail-heads on each side of each nail (7), between the nail and the reinforcing ply;
compacting of the set of punches (11);
rotating the set of compacted punches about 180 degrees;
positioning the set of punches (11) on the base skin (5) to flatten, against the base skin, a continuous flat surface defined in part by an outer surface of the connecting portion of the U-shaped stiffeners and in part by the interfacing structure of the nail and nail-head interposed between two adjacent stiffeners; and
withdrawing the set of punches (11) having a U-shaped cross-sections.

5. A method of placing components of a self-stiffened panel of preimpregnated composite having a base skin (18), a first side of the base skin including a plurality of substantially U-shaped stiffeners (19) placed side-by-side, adjoining branches of two adjacent stiffeners interposed by an interfacing structure and the parts connecting the branches of the U being flattened against the base skin, the interfacing structure comprising a nail having a nail-head comprised of a cord of filling resin, the nail comprising two half-nails (20, 21) arranged side-by-side and **characterised in that** the nail-head comprises two half-nail-heads (22,23) arranged substantially symmetrically in an angle formed between the base skin (18) and the nail (20, 21) and by the following steps:
placing and shaping at least one reinforcing ply (15) of preimpregnated carbon fibers on a set of individual punches (11), the punches having substantially U-shaped cross-sections and rounded corners and a length corresponding to a length of the U-shaped stiffeners;
forming the half-nails by draping at least one ply of preimpregnated carbon fibers, the half-nails (20, 21) comprising a band of a length corresponding to the length of the U-shaped stiffeners (19) and a width corresponding to a height of the branches;
placing a half-nail on each side of each punch covered by the at least one reinforcing ply and positioned in an inverted U position and inserting a half-nail-head (22, 23) between each reinforcing ply and half-nail in an area defined by the rounded corner of the punch (11);
individually compacting each prepared punch (11);
individually rotating each punch (11) approximately 180 degrees;
positioning the set of punches side-by-side on the base skin (18) and flattening, against the base skin, a continuous flat surface defined in part by an outer surface of the connecting portions of the stiffeners and in part by the interfacing structure of the nail and nail-head interposed between adjacent stiffeners; and
withdrawing the set of punches (11) having U-shaped cross-sections.

## Patentansprüche

1. Vorimprägnierte, selbststraffende Verbundwerkstofftafel des Typs, der aus einer Basishaut (5; 18) gebildet ist, wovon auf einer der Seiten U-förmige Versteifungsrippen (6; 19) angefügt und Seite an Seite angeordnet sind, wobei die Verbindungsabschnitte der Schenkel des U gegen die Haut gedrückt sind, wobei zwischen die Schenkel gegenüber von zwei benachbarten Versteifungsrippen eine gewöhnlich "Nagel" genannte Grenzflächenstruktur eingefügt ist, die durch einen "Nagelkopf" vervollständigt ist, der aus einem Füllharzwulst gebildet ist, **dadurch gekennzeichnet, dass** der Nagel aus einem Band (7; 20; 21) mit rechtwinkligem Querschnitt gebildet ist, wovon die Schnittfläche auf Seiten der Haut (5; 18) direkt mit der Fläche gegenüber der Haut in Kontakt ist, und dass der Nagelkopf aus zwei Halbköpfen (9; 10; 22; 23) gebildet ist, die symmetrisch unter dem Winkel, der zwischen der Haut (5; 18) und dem Nagel (7; 20; 21) gebildet wird, angeordnet sind.

2. Tafel nach Anspruch 1, **dadurch gekennzeichnet, dass** das den Nagel bildende Band ein einzelner Block (7) ist und aus wenigstens einer Lage aus vorimprägnierten Kohlenstofffasern gebildet ist.

3. Tafel nach Anspruch 1, **dadurch gekennzeichnet, dass** das den Nagel bildende Band aus zwei Elementen oder Halbnägeln (20; 21) gebildet ist, die aneinander geklebt sind und jeweils aus wenigstens einer Lage aus vorimprägnierten Kohlenstofffasern gebildet sind.

4. Verfahren zum Anordnen von Elementen einer vorimprägnierten, selbststraffenden Verbundwerkstofftafel des Typs, der aus einer Basishaut (5) gebildet ist, wovon auf einer der Seiten U-förmige Versteifungsrippen (6) angefügt und Seite an Seite angeordnet sind, wobei die Verbindungsabschnitte der Schenkel gegen die Haut gedrückt sind, wobei zwischen die Schenkel gegenüber von zwei benachbarten Versteifungsrippen eine gewöhnlich "Nagel" genannte Grenzflächenstruktur eingefügt ist, die durch einen "Nagelkopf" vervollständigt ist, der durch einen Füllharzwulst gebildet ist, wobei der Nagel ein einzelner Block (7) ist, **dadurch gekennzeichnet, dass** der Nagelkopf aus zwei Nagel-Halbköpfen (9, 10) gebildet ist, die unter dem Winkel, der zwischen der Haut (5) und dem Nagel (7) gebildet wird, symmetrisch angeordnet sind, und **dadurch**, dass es die folgenden Schritte umfasst:
- Drapieren mehrerer übereinander liegender Lagen aus vorimprägnierten Kohlenstofffasern, um die Basishaut (5) zu bilden;
- Anordnen und Formen wenigstens einer Verstärkungslage (6) aus vorimprägnierten Kohlenstofffasern auf einzelnen Dornen (11) mit U-Querschnitt und abgerundeten Kanten und einer Länge, die jener der U-förmigen Versteifungsrippen der zu verwirklichenden Tafel entspricht;
- Verwirklichen eines Nagels (7) durch Drapieren wenigstens einer Lage aus vorimprägnierten Kohlenstofffasern, wobei der Nagel aus einem Band mit einer Länge, die jener der U-förmigen Versteifungsrippen (6) entspricht, und mit einer Breite, die gleich der Höhe der Schenkel des U ist, gebildet ist;
- Positionieren der Dorne (11) Seite an Seite in der Position eines umgedrehten U unter Einfügung des Nagels (7);
- Anordnen der zwei oben genannten Nagel-Halbköpfe (9, 10) beiderseits jedes Nagels (7) zwischen diesem Letzteren und der Verstärkungslage (6);
- Verdichten der Gesamtheit der auf diese Weise zusammengeklebten Dorne (11);
- Umdrehen der Gesamtheit aus verdichteten Dornen (11) um 180°;
- Positionieren dieser Gesamtheit auf der Basishaut (5) in der Weise, dass gegen diese Letztere eine ununterbrochene ebene Oberfläche gedrückt wird, die einerseits durch die äußere Fläche der Verbindungsabschnitte der Schenkel der U's der Versteifungsrippen (6) und andererseits durch die Gesamtheit "Nagel + Nagelköpfe", die zwei benachbarte Versteifungsrippen (6) trennt, definiert ist;
- und schließlich Herausziehen der U-förmigen Dorne (11).

5. Verfahren zum Anordnen von Elementen einer vorimprägnierten, selbststraffenden Verbundwerkstoff-Tafel des Typs, der aus einer Basishaut (18) gebildet ist, wovon auf einer Seite U-förmige Versteifungsrippen (19) angefügt und Seite an Seite angeordnet sind, wobei die Verbindungsabschnitte der Schenkel des U gegen die Haut gedrückt werden, wobei zwischen die Schenkel gegenüber von zwei benachbarten Versteifungsrippen eine gewöhnlich "Nagel" genannte Grenzflächenstruktur eingefügt wird, die durch einen "Nagelkopf" vervollständigt ist, der durch einen Füllharzwulst gebildet ist, **dadurch gekennzeichnet, dass** der Nagel aus zwei zusammengeklebten Halbnägeln (20, 21) gebildet ist und der Nagelkopf aus zwei Halbköpfen (22) gebildet ist, die unter dem Winkel, der zwischen der Haut (18) und dem Nagel (20, 21) gebildet wird, symmetrisch angeordnet sind, und **dadurch**, dass es die folgenden Schritte umfasst:
- Anordnen und Formen wenigstens einer Verstärkungslage (15) aus vorimprägnierten Kohlenstofffasern auf einzelnen Dornen (11) mit U-förmigem Querschnitt und abgerundeten Kanten und einer Länge, die jener der U-förmigen Versteifungsrippen der zu verwirklichenden Tafel entspricht;
- Verwirklichen von Halbnägeln (20, 21) durch Drapieren wenigstens einer Lage aus vorimprägnierten Kohlenstofffasern, wobei die Halbnägel aus einem Band mit einer Länge, die jener der U-förmigen Versteifungsrippen (19) entspricht, und einer Breite, die gleich der Höhe der Schenkel des U ist, gebildet sind;
- Anordnen eines Halbnagels (20, 21) und eines Nagel-Halbkopfes (22, 23), der auf Höhe einer abgerundeten Kante des Dorns zwischen die Verstärkungslage (15) und den Halbnagel (20, 21) eingefügt ist, auf zwei Seitenflächen jedes mit der Verstärkungslage (15) überzogenen Dorns (11) und in der Position eines umgedrehten U;
- einzelnes Verdichten jedes auf diese Weise beschichteten Dorns (11);
- einzelnes Umdrehen der Dorne (11) um 180°;
- dann Positionieren der Dorne (11) Seite an Seite auf der Basishaut (18) in der Weise, dass gegen diese Letztere eine ununterbrochene ebene Oberfläche gedrückt wird, die einerseits durch die äußere Fläche der Verbindungsabschnitte der Schenkel der U's der Versteifungsrippen (15) und andererseits durch die Gesamtheit "Nagel + Nagelköpfe", die zwei benachbarte Versteifungsrippen trennt, definiert ist;
- und schließlich Herausziehen der U-förmigen Dorne (11).
